# EUROPÄISCHE PATENTSCHRIFT

(11) **EP 2 768 357 B1**
(45) Veröffentlichungstag und Bekanntmachung des Hinweises auf die Patenterteilung: **14.10.2015**
(21) Anmeldenummer: 12748216.4
(22) Anmeldetag: 16.08.2012
(51) Int. Cl.: B01F 5/02, B01F 3/04, A47J 31/44

(54) **MILCHSCHÄUMVORRICHTUNG SOWIE KAFFEE- BZW. ESPRESSOMASCHINE UND GETRÄNKEVERKAUFSAUTOMAT MIT EINER SOLCHEN MILCHSCHÄUMVORRICHTUNG**
MILK-FROTHING APPARATUS, AND COFFEE OR ESPRESSO MACHINE AND AUTOMATIC BEVERAGE VENDING MACHINE HAVING A MILK-FROTHING APPARATUS OF THIS KIND
MOUSSEUR À LAIT ET MACHINE À CAFÉ OU EXPRESSO ET DISTRIBUTEUR DE BOISSONS COMPRENANT UN TEL MOUSSEUR À LAIT

(30) Priorität: 21.10.2011 DE 202011051719 U; 09.03.2012 CH 342122012
(43) Veröffentlichungstag der Anmeldung: 27.08.2014
(73) Patentinhaber: Schaerer AG, 4528 Zuchwil (CH)
(72) Erfinder: AEBERHARD, Bruno, CH-4528 Zuchwil (CH); EGLI, Peter, 3053 Münchenbuchsee (CH); MOSIMANN, Bruno, 3415 Rüegsauschachen (CH); LÜSSI, André, CH-3303 Jegenstorf (CH)
(74) Vertreter: Rentsch Partner AG
(86) Internationale Anmeldenummer: PCT/EP2012/066011
(87) Internationale Veröffentlichungsnummer: WO 2013/056871

(56) Entgegenhaltungen:
- EP-A1- 0 373 985
- DE-A1-102004 025 037
- DE-U1- 8 907 183
- DE-U1- 20 102 048
- US-A- 5 189 949
- US-A1- 2006 230 943

## Beschreibung

### TECHNISCHES GEBIET

Die vorliegende Erfindung bezieht sich auf das Gebiet der Kaffee- bzw. Espressomaschinen bzw. Getränkeverkaufsautomaten. Sie betrifft eine Milchschäumvorrichtung gemäss dem Oberbegriff des Anspruchs 1.

Sie betrifft weiterhin eine Kaffee- bzw. Espressomaschine sowie einen Getränkeverkaufsautomaten mit einer solchen Milchschäumvorrichtung.

### STAND DER TECHNIK

Bei Kaffeemaschinen oder Espressomaschinen oder bei Getränkeverkaufsautomaten, die frisch gebrühte Kaffeegetränke ausgeben, ist meist die Möglichkeit vorgesehen, Milch zu erhitzen und/oder aufzuschäumen, um beispielsweise einen Cappuccino oder Latte Macchiato oder ein anderes Milch enthaltendes Mischgetränk zuzubereiten.

Der Milchschaum kann dabei extern mittels einer an der Maschine angeordneten Dampflanze erzeugt werden, die in ein externes, Milch enthaltendes Gefäss eingetaucht wird und die Milch durch den aus der Lanze austretenden Dampfstrahl erhitzt und unter Vermischung mit Luft aufschäumt.

Häufig ist aber auch innerhalb der Maschinen eine interne Milchschäumvorrichtung vorgesehen, in der in eine Mischkammer Milch aus einem separaten Milchbehälter durch Ansaugen oder Pumpen eingeführt und unter Zuführung von Dampf und Luft erhitzt und aufgeschäumt wird. Der erzeugte Milchschaum wird dann nach aussen abgegeben.

Problematisch ist bei dieser internen Erzeugung von Milchschaum die Kontamination der beteiligten Maschinenteile (Mischkammer, Milchleitung etc.) mit der Milch. Damit durch die Zersetzung von Milchresten in der Maschine keine geschmacklichen und/oder gesundheitlichen Beeinträchtigungen entstehen können, ist es notwendig, regelmässig allfällige Milchreste aus der Maschine sicher zu entfernen.

In der Regel werden daher bei derartigen Maschinen spezielle Reinigungsvorrichtungen und -vorschriften vorgesehen, die ein Verschmutzen der Maschine durch Milchreste verhindern. Es ist dabei denkbar, die mit Milch beaufschlagten Maschinenteile in bestimmten Zeitabständen oder nach jeder Milchschaumbereitung zu spülen. Es ist aber auch denkbar, bestimmte Maschinenteile herausnehmbar auszugestalten und sie in bestimmten Zeitabständen auszubauen, extern zu reinigen und wieder einzubauen.

Aus der DE 201 02 048 U1 ist eine Sicherheitsvorrichtung eines Dampfschäumgeräts zur Herstellung eines geschäumten Getränks, insbesondere geschäumten Milchkakao oder Cappuccino, bekannt, mit einem mit einem Dampfgenerator verbundenen Dampfrohr, welches eine Dampfauslassöffnung aufweist, und mit einem auf das Dampfrohr aufschiebbaren Schäumkopf, der im aufgeschobenen Zustand die Dampfauslassöffnung einschliesst, wobei auf das Dampfrohr ein Hohlkörper schiebbar ist, der in einer Freigabestellung einen Dampfauslass im wesentlichen nach unten freigibt, wogegen in anderer Stellung als der Freigabestellung des Hohlkörpers ein Dampfauslass im wesentlichen nach unten unterbunden ist.

Aus der US 5,189,949 A ist eine Belüftungs- und Mischvorrichtung für das Mischen von Milch oder Sahne mit Luft und Dampf bekannt, um einen gut zubereiteten Cappuccino ausgeben zu können. Die Vorrichtung wird auf eine Dampfdüse aufgesetzt, die zugleich einen Einlasskanal für die Luft von vorbestimmtem Durchmesser enthält. Die Einrichtung kann auf die Dampflanze einer Cappuccino-Maschine aufgeschoben werden. Die Mischvorrichtung kann zu Reinigungszwecken zerlegt werden.

Aus der DE 89 07 183 U1 ist ein blasenbildender Behälter bekannt, mit einem Körper mit einer in dem Körper gebildeten Innenkammer, einer Einlasseinheit vom Venturirohr-Typ und einer Auslassrohr-Einheit, wobei die Einlasseinheit ein Hauptrohr mit einer Öffnung auf weist, einem Zweigrohr, das mit der Öffnung des Hauptrohrs verbunden ist, und ein durch eine Oberwand des Körpers gebildeter Einlass in Verbindung mit dem Hauptrohr, wobei die Auslassrohr-Einheit ein Auslassrohr aufweist, das sich durch eine untere Wand des Körpers erstreckt, wobei eine Sperrplatte ein Oberende des Auslassrohres abdichtet, und eine Öffnung, die durch das Auslassrohr gebildet ist und die Kammer und das Auslassrohr verbindet.

Es ist unmittelbar einleuchtend, dass derartige Reinigungsvorrichtungen und -vorgänge aufwändig sind, von der Bedienperson eine erhebliche Sorgfalt erfordern, um erfolgreich zu sein, und erheblichen Zeitaufwand verursachen und damit zu unerwünschten längeren Stillstandszeiten der Maschine führen.

In der Druckschrift EP 1 578 236 B1 ist nun eine an den Dampfaustritt einer Kaffeemaschine anpassbare Düse zum Aufschäumen von Milch vorgeschlagen worden, die als Wegwerfdüse ausgebildet ist und durch Zusammenfügen von zwei spiegelbildlichen Schalen gebildet ist, die aus einem Kunststoff spritzgegossen und miteinander verschweisst sind. Die Düse hat eine Mündung für den Dampfzutritt, eine Verengung in der Verlängerung der Mündung und senkrecht zur Mündung eine Leitung für den Zutritt der Milch, und einen Lufteintritt, der aus einer in die Leitung für die Milch mündenden Leitung besteht.

Nachteilig ist bei dieser externen, mit einer vorhandenen Dampflanze arbeitenden Lösung einerseits, dass die Luft passiv durch Ansaugen direkt in die Milch eingeführt wird, so dass eine separate Steuerung bzw. Regelung der Luftzufuhr praktisch nicht möglich ist. Andererseits sind keine speziellen Befestigungsmöglichkeiten für die Düse offenbart, so dass ein sicherer Betrieb und Austausch der Düse nicht gewährleistet ist.

Aus der Druckschrift EP 1 746 920 B1 ist eine Vorrichtung zum Aufschäumen von Milch mit externer Milchansaugleitung als Zusatzeinrichtung zum Anschluss an die mit einer Dampfdüse versehene Dampfzuleitung von Espresso-Maschinen oder ähnlichen Haushaltsmaschinen bekannt, wobei die Vorrichtung mit einer zur Erzeugung von Unterdruck in einem Unterdruckraum mittels Dampfströmung vorgesehenen Düsenanordnung ausgerüstet ist und getrennt oder gemeinsam geführte und mit dem Unterdruckraum verbundene Ansaugleitungen für Milch und Luft oder Milch-Luft-Gemisch und eine Abgabeöffnung zur Abgabe des erzeugten Dampf-Milch-Luft-Gemisches besitzt und die Milchansaugleitung in die zu behandelnde Milch eintauchbar ist, die sich in dem zur Aufnahme des Dampf-Milch-Luft-Gemisches vorgesehenen Behälter oder einem getrennten Behälter befindet.

Diese bekannte Vorrichtung ist mindestens aus einem an die Dampfzuleitung mit Dampfdüse anschliessbaren Festteil und einem mit ihm leicht auswechselbar verbindbaren Wegwerfteil zusammengesetzt. Das Wegwerfteil besteht mindestens aus einer im Bereich des Festteils angeordneten Düsenanordnung mit Unterdruckraum und Ansaugleitungen sowie einem Milchansaugrohr und einem Milchschaumabführrohr, wobei zumindest beide Rohre im Wesentlichen als durch Strangpressen erzeugbare dünnwandige Kunststoffrohre ausgebildet sind.

Auch diese externe Lösung sieht eine Mischung von angesaugter Luft mit Milch vor der Dampfeinleitung vor und weist daher die gleichen Nachteile auf, wie die vorher beschrieben Lösung.

Die Druckschrift EP 2 189 085 A1 lehrt eine Anordnung zum Aufschäumen von Milch in einem Heissgetränkeautomaten, die eine Aufschäumeinheit, einen Heissdampferzeuger, welcher mit der Aufschäumeinheit über eine erste Zuleitung zur Zufuhr von Heissdampf verbunden ist, sowie eine Milch-Fördereinrichtung aufweist, welche der Aufschäumeinheit aufzuschäumende Milch aus einem Milch-Vorratsbehälter über eine zweite Zuleitung mittels einer auf die zweite Zuleitung aufsetzbaren peristaltischen Pump-Einrichtung zuführt, wobei die Milch und der Heissdampf in der Aufschäumeinheit unter Zufuhr von Umgebungsluft zu Milchschaum vermischt werden.

Die Anordnung zeichnet sich dadurch aus, dass die zweite Zuleitung unlösbar mit der Aufschäumeinheit verbunden ist, dass der Heissdampf und die Umgebungsluft der Aufschäumeinheit gemeinsam über die erste Zuleitung zugeführt werden, und dass die Aufschäumeinheit zusammen mit der zweiten Zuleitung als Einheit aus dem Getränkeautomaten entnehmbar ist. Zusätzlich verläuft durch die Anordnung hindurch ein Getränkezufuhrkanal zur Zuführung eines mit dem Milchschaum vermischbaren Getränks.

Nachteilig ist bei dieser Lösung vor allem die komplexe Kombination von Milchschaumerzeugung und Getränkzufuhr mit Kaffeeauslauf in einer Baueinheit. Zum einen ergibt sich dadurch ein höherer Materialbedarf, zum anderen muss beim Auswechseln sowohl der Dampfschlauch als auch der Kaffeeschlauch getrennt werden. Als nachteilig im Sinne fehlender Flexibilität kann auch angesehen werden, dass die Aufschäumeinheit und die Milchzuleitung aus demselben Material gefertigt sein sollen.

Aus der Druckschrift DE 10 2005 010 600 A1 ist als weitergehende, externe Lösung eine Vorrichtung zum Aufschäumen von Milch als Zusatzeinrichtung zum Anschluss an die mit einer Dampfdüse versehene Dampfzuleitung von Espresso-Maschinen oder ähnlichen Haushaltsmaschinen bekannt, wobei die Vorrichtung mit einer zur Erzeugung von Unterdruck in einem Unterdruckraum mittels Dampfströmung vorgesehenen Düsenanordnung ausgerüstet ist und getrennt oder gemeinsam geführte und mit dem Unterdruckraum verbundene Ansaugleitungen für Milch und Luft oder Milch-Luft-Gemisch und ein Milchschaumabführrohr mit Abgabeöffnung zur Abgabe des erzeugten Milchschaums besitzt und die Milchansaugleitung in die zu behandelnde Milch eintaucht, die sich in einem Milchbehälter befindet.

Neuartig ist dabei, dass zumindest Düsenanordnung mit Unterdruckraum, Milchbehälter, Milchansaugleitung und Milchschaumabführrohr im Wesentlichen fest miteinander verbunden eine Milch-Aufschäumvorrichtung bilden, die insgesamt als nach Gebrauch einfach zu entsorgendes Wegwerfteil ausgebildet und an der Dampfzuleitung leicht auswechselbar befestigbar ist.

Nachteilig ist bei dieser ebenfalls externen Lösung, dass die Milch erst umgefüllt werden muss, dass die Luftzufuhr nicht steuerbar ist, und dass der Herstellungs- und Materialaufwand dieser Anordnung vergleichsweise hoch ist.

Die Druckschrift EP 1 374 748 A2 schliesslich zeigt einen Getränkeautomaten mit einem Kühlfach zur Aufnahme eines gekühlten Milchbehälters, einer auf einem Venturisystem beruhenden Emulgiereinheit zu Emulgieren und Ausgeben der Milch. Das Kühlfach befindet sich über der Emulgiereinheit. Zwischen dem Kühlfach und der Emulgiereinheit ist ein elektrisch betätigtes Mengenventil für die Milch angeordnet. Wird das Mengenventil aktiviert, fliesst die Milch schwerkraftbedingt nach unten aus dem Aufbewahrungsbehälter direkt in die Emulgiereinheit. In der Beschreibung (Absatz [0014]) wird darauf hingewiesen dass die Emulgiereinheit als Wegwerfteil ausgebildet sein kann, um die Reinigung zu erleichtern bzw. zu ersparen.

Problematisch ist hier die Art der Befestigung der Emulgiereinheit, die einfach aufgesteckt wird und auf vergleichsweise komplizierte Art und Weise mit dem Mengenventil verbunden werden muss.

### DARSTELLUNG DER ERFINDUNG

Es ist daher eine Aufgabe der Erfindung, eine Milchschäumvorrichtung zu schaffen, welche die Nachteile bekannter Milchschäumvorrichtungen möglichst vermeidet und sich insbesondere dadurch auszeichnet, dass sie einerseits leicht austauschbar ist und andererseits eine sichere Befestigung ermöglicht bei gleichzeitig flexibler Ausgestaltung der Schaumerzeugung.

Es ist weiterhin Aufgabe der Erfindung, eine Kaffee- bzw. Espressomaschine und einen Getränkeverkaufsautomaten mit einer solchen Milchschäumvorrichtung anzugeben.

Diese und andere Aufgaben werden durch die Merkmale der Ansprüche 1, 17 und 18 gelöst.

Die Erfindung geht aus von einer Milchschäumvorrichtung, insbesondere für eine Kaffee- bzw. Espressomaschine, umfassend eine als leicht austauschbares Wegwerfteil bzw. Recyclingteil ausgebildete Schaumerzeugungseinheit mit einer Mischkammer, einem von der Mischkammer nach aussen führenden Auslass für den erzeugten Milchschaum und ersten Mitteln, durch welche der Schaumerzeugungseinheit Dampf und Luft zugeführt wird, sowie zweiten Mitteln, durch welche der Schaumerzeugungseinheit Milch zugeführt wird, wobei die Schaumerzeugungseinheit lösbar mit einer Halterung verbunden werden kann.

Die Erfindung zeichnet sich dadurch aus, dass die ersten Mittel einen ersten Einlass umfassen, durch welchen Dampf und Luft gemeinsam in die Schaumerzeugungseinheit eintreten, dass an der Halterung eine nach aussen abstehende kombinierte Dampf-Luft-Düse vorgesehen ist, die mit einem Dampferzeuger und einer Luftpumpe in Verbindung steht und durch welche Dampf und Luft gemeinsam herangeführt werden, und dass der erste Einlass und die Dampf-Luft-Düse so ausgebildet und aufeinander abgestimmt sind, dass sie eine lösbare hydraulische Steckverbindung bilden.

Eine Ausgestaltung der Erfindung ist dadurch gekennzeichnet, dass die aus dem ersten Einlass und der Dampf-Luft-Düse gebildete hydraulische Steckverbindung eine Drehverriegelung aufweist. Hierdurch wird sicher vermieden, dass die Schaumerzeugungseinheit von der Dampf-Luft-Düse ungewollt abgezogen werden kann.

Besonders vorteilhaft ist es dabei, wenn die aus dem ersten Einlass und der Dampf-Luft-Düse gebildete hydraulische Steckverbindung Rastmittel aufweist, mittels derer sie im verriegelten Zustand lösbar einrastet.

Eine andere Ausgestaltung der Erfindung zeichnet sich dadurch aus, dass der erste Einlass als an der Mischkammer angeformter erster Rohrstutzen ausgebildet ist. Hierdurch ergibt sich Platz für Verriegelungs- und Rasteinrichtungen sowie andere Zusatzeinrichtungen, die für die Funktion der Vorrichtung von Vorteil sind.

Eine weitere Ausgestaltung der Erfindung ist dadurch gekennzeichnet, dass die zweiten Mittel einen zweiten Einlass umfassen, der als radial vom ersten Rohrstutzen abgehender zweiter Rohrstutzen ausgebildet ist. Durch diese Art der Milchzufuhr ergibt sich praktisch keine Behinderung der eigentlichen hydraulischen Steckverbindung.

Vorzugsweise ist am zweiten Rohrstutzen ein Schlauchansatz zum Aufschieben eines Milchschlauches angeformt. Auf diese Weise können Schaumerzeugungseinheit und Milchschlauch sehr einfach eine flexibel einsetzbare Einheit bilden, die nach Gebrauch weggeworfen werden kann.

Besonders einfach ist die Milchschäumvorrichtung, wenn der zweite Rohrstutzen Teil einer lösbaren Rastvorrichtung ist.

Die Rastvorrichtung kann dann weiterhin einen elastischen Rastarm umfassen, der an der Halterung angebracht ist und mit dem zweiten Rohrstutzen rastend in Eingriff kommt, wenn die aus dem ersten Einlass und der Dampf-Luft-Düse gebildete hydraulische Steckverbindung drehverriegelt wird.

Eine noch andere Ausgestaltung der Milchschäumvorrichtung nach der Erfindung ist dadurch gekennzeichnet, dass die Schaumerzeugungseinheit ein in einem Stück gefertigtes Kunststoff-Spritzgussteil mit oben offener Mischkammer umfasst, die durch einen aufgesetzten Deckel verschlossen wird. Auf diese Weise werden die Herstellungskosten für die Schaumerzeugungseinheit gering gehalten.

Zusätzlich können an der Halterung elektrische Schaltmittel angeordnet sein, welche betätigt werden, wenn die aus dem ersten Einlass und der Dampf-Luft-Düse gebildete hydraulische Steckverbindung im verriegelten Zustand lösbar einrastet. Auf diese Weise lässt sich der korrekte Sitz und Zustand der Verbindung zwischen Schaumerzeugungseinheit und Halterung einfach überwachen und zu Steuerungszwecken verwenden.

Insbesondere kann an der Schaumerzeugungseinheit ein Betätigungselement zur Betätigung der elektrischen Schaltmittel angeordnet sein.

Vorzugsweise umfassen die elektrischen Schaltmittel einen Mikroschalter.

Gemäss einer anderen Ausgestaltung umfasst die Drehverriegelung ein an der Halterung angebrachtes Halteelement, hinter welches die Schaumerzeugungseinheit mit einem angeformten Drehriegel greift.

Gemäss einer anderen Ausgestaltung sind weiterhin Mittel zum Spülen der Schaumerzeugungseinheit vorgesehen. Hierdurch ist es möglich, die Schaumerzeugungseinheit auch zu spülen und dadurch den Austausch der Schaumerzeugungseinheit bei Bedarf hinauszuschieben.

Insbesondere umfassen die Mittel zum Spülen der Schaumerzeugungseinheit eine Spülleitung zur Zuführung eines Spülmediums, z.B. Wasser, welche mit der Dampf-Luft-Düse in Verbindung steht.

Eine weitere Ausgestaltung ist dadurch gekennzeichnet, dass für die Zuführung der Milch zur Schaumerzeugungseinheit ein Milchschlauch vorgesehen ist, und dass der Durchsatz der Milch durch den Milchschlauch durch eine Reduktionsdüse einstellbar ist, welche in das eine Ende des Milchschlauches einsteckbar ist.

Die erfindungsgemässe Kaffee- bzw. Espressomaschine und der erfindungsgemässe Getränkeverkaufsautomat weisen eine Milchschäumvorrichtung nach der Erfindung auf, wobei insbesondere die Milchschäumvorrichtung in ein Auslaufmodul des Getränkeverkaufsautomaten integriert ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: einen Ausschnitt eines beispielhaften Fluid-Schemas einer Kaffee- bzw. Espressomaschine, der sich auf die Milchschäumvorrichtung mit einer Schaumerzeugungseinheit bezieht;
- Fig. 2: in einer perspektivischen Seitenansicht eine Schaumerzeugungseinheit mit zugehöriger Halterung (an der Kaffee- bzw. Espressomaschine) gemäss einem Ausführungsbeispiel der Erfindung vor dem Zusammenstecken bzw. Verriegeln;
- Fig. 3: in einer perspektivischen Seitenansicht Schaumerzeugungseinheit und Halterung gemäss Fig. 2 im Augenblick des Verriegelns;
- Fig. 4: in einer perspektivischen Ansicht schräg von unten die in der Halterung einrastend verriegelte Schaumerzeugungseinheit;
- Fig. 5: die Vorrichtung aus Fig. 4 aus einem anderen Blickwinkel und in teilweise geschnittener Ansicht;
- Fig. 5a: den Schnitt durch eine Reduktionsdüse zur Einstellung des Milchdurchsatzes, welche am behälterseitigen Schlauchende des Milchschlauchs lösbar befestigt bzw. aufgesteckt wird;
- Fig. 6-7: die Schaumerzeugungseinheit des Ausführungsbeispiels für sich genommen in perspektivischer Darstellung aus zwei verschiedenen Blickrichtungen;
- Fig. 8: eine vereinfachte Darstellung eines für den Einsatz der Milchschäumeinheit bzw. Schaumerzeugungseinheit besonders geeigneten Getränkeverkaufsautomaten in der Ansicht von vorne; und
- Fig. 9: die beispielhafte Anordnung verschiedener Module im Inneren eines Getränkeverkaufsautomaten gemäss Fig. 8.

### WEGE ZUR AUSFÜHRUNG DER ERFINDUNG

Die vorliegende Milchschäumvorrichtung ist üblicherweise Teil einer Kaffee- oder Espressomaschine und dient dazu, Milch aus einem separaten Behälter bei Bedarf manuell oder programmgesteuert zu erhitzen und/oder aufzuschäumen, um den erzeugten Milchschaum zur Zubereitung eines Mischgetränks, beispielsweise eines Cappuccinos, zu verwenden.

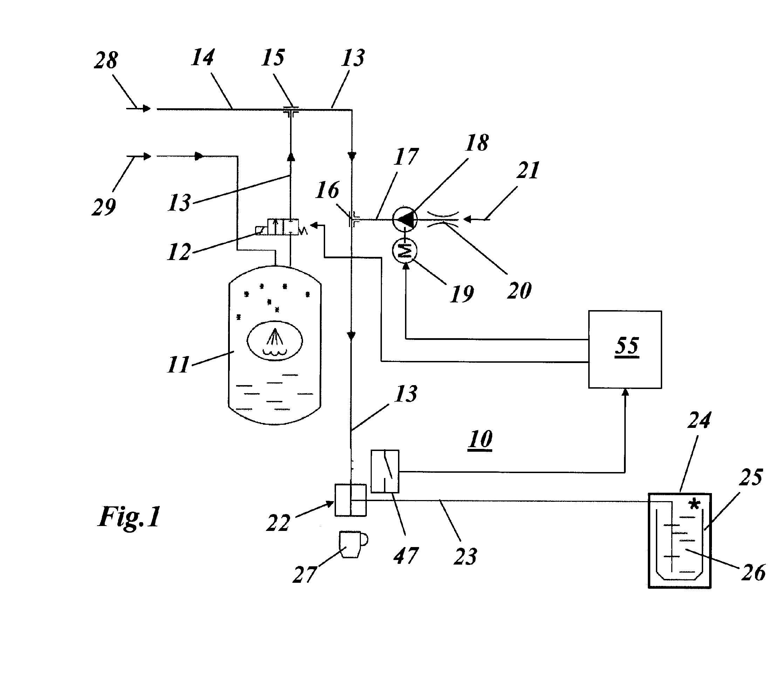

Fig. 1 zeigt einen Ausschnitt eines beispielhaften Fluid-Schemas einer solchen Kaffee- bzw. Espressomaschine, der sich auf eine Milchschäumvorrichtung 10 mit einer Schaumerzeugungseinheit 22 bezieht. Die Schaumerzeugungseinheit 22 ist über eine Dampfleitung 13 an einen Dampferzeuger 11 angeschlossen und wird von dort, steuerbar über ein Dampfventil 12, mit heissem Dampf versorgt. In die Dampfleitungen 13 ist ein TStück 16 eingebaut, über das dem Dampf Druckluft zugemischt werden kann, die von einer Luftpumpe 18 mit Antriebsmotor 19 erzeugt und über eine Druckluftleitung 17 zugeführt wird. Der Betrieb des Antriebsmotors 19 wird von einer Steuerung 55 gesteuert, die unter anderem auch für die Betätigung des Dampfventils 12 zuständig ist. Luft 21 wird von der Luftpumpe über eine Drosselvorrichtung 20 angesaugt, die einstellbar ausgebildet sein kann. Alternativ dazu ist es aber auch denkbar, auf das T-Stück 16 zu verzichten und die Druckluft direkt oder über die Wasserzufuhr in den Dampferzeuger 11 einzubringen, wo sie sich mit dem Dampf vermischt und als Dampf-Luft-Gemisch aus dem Dampferzeuger 11 in die Dampfleitung 13 austritt.

In Strömungsrichtung hinter dem TStück 16 bildet sich in der Dampfleitung 13 ein Dampf-Luft-Gemisch, das in der Schaumerzeugungseinheit 23 zum Erhitzen und Aufschäumen der zugeführten Milch verwendet wird. Der erzeugte Milchschaum wird dann an eine Tasse oder einen Becher 27 abgegeben. Die Milch wird über eine Milchleitung 23 aus einem mit Milch 26 gefüllten Milchbehälter 25 angesaugt, der beispielsweise in einem separaten Milchkühler 24 untergebracht sein kann.

In die Dampfleitung 13 kann mittels eines weiteren T-Stücks 15 eine Spülleitung 14 einmünden, über die von aussen ein Spülmedium 28 eingeführt werden kann, mit dem bei Bedarf die Leitungen durchgespült werden können. Hierdurch ergibt sich der Vorteil, dass eine "Reinigung" während des Betriebes stattfinden kann, da das Spülmedium bzw. -wasser über denselben Weg in die Schaumerzeugungseinheit gelangen kann wie der Dampf. Der Dampferzeuger 11 wird über eine weitere Leitung mit Wasser 29 versorgt, das auch als Heisswasser aus einem weiteren (nicht gezeigten) Heisswasserbereiter stammen kann.

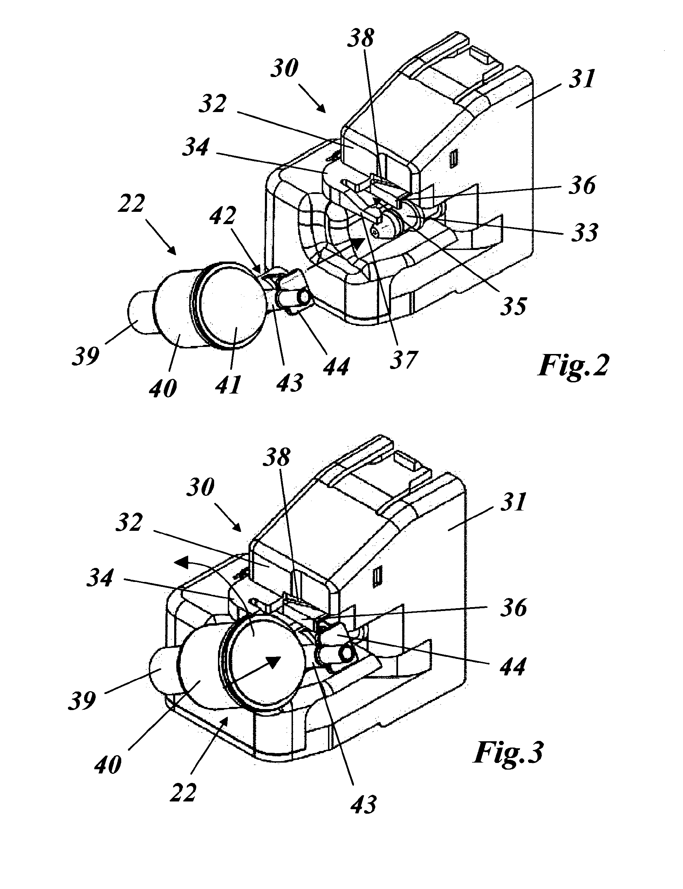

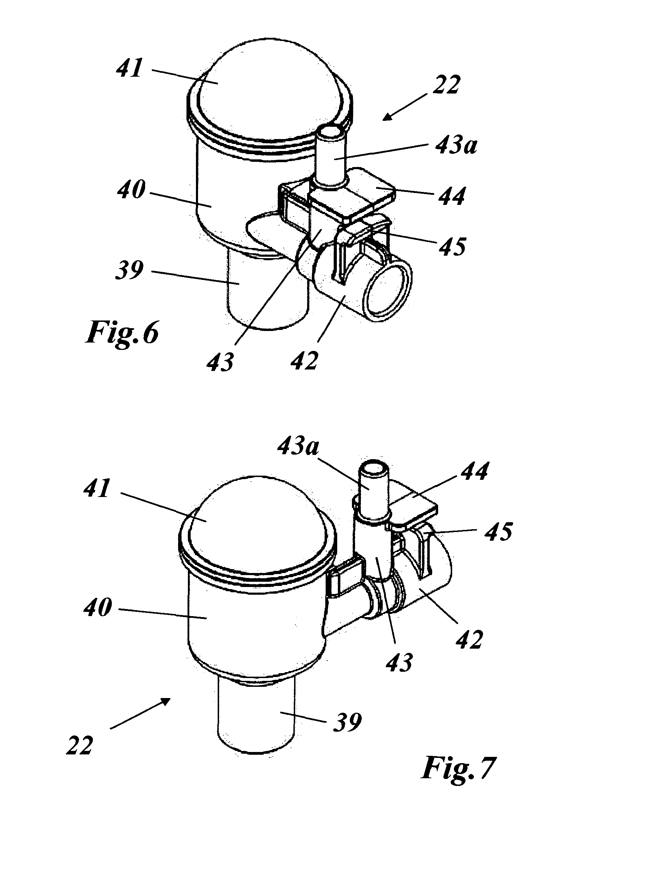

Die als leicht auswechselbares Wegwerfteil bzw. Recyclingteil ausgebildete Schaumerzeugungseinheit 22, die in Fig. 6 und 7 separat dargestellt ist, wird gemäss Fig. 2-5 über eine Halterung 30 an die Kaffee- bzw. Espressomaschine angeschlossen (die Maschine selbst ist in den Figuren nicht wiedergegeben; die Konfiguration kann ähnlich sein, wie in Fig. 1 der eingangs genannten EP 1 374 748 A2). Schaumerzeugungseinheit 22 und Halterung 30 sind dabei so ausgebildet, dass zwischen beiden schnell und einfach eine leicht lösbare und gleichzeitig zuverlässig haltende fluidische Verbindung herstellbar ist. Dazu sind beide Teile nach Art einer hydraulischen Steckverbindung ausgeführt und zur Sicherung mit einer einrastenden Drehverriegelung mit elektrischer Überwachung versehen, die beispielsweise über die Steuerung 55 die Dampf- und/oder Luftzufuhr unterbricht oder verhindert, wenn ein fehlerhafter Sitz der Schaumerzeugungseinheit 22 in der Halterung 30 detektiert wird.

Neben der Möglichkeit, das elektrische Signal über die Steuerung 55 zu schalten, gibt es auch die Möglichkeit, über einen zusätzlichen Kontakt die Speisespannung des Dampfventils 12 zu unterbrechen. Diese Variante kommt zum Tragen, wenn aus Sicherheitsgründen verhindert werden muss, dass Dampf austritt, ohne dass eine Schaumerzeugungseinheit 22 montiert ist.

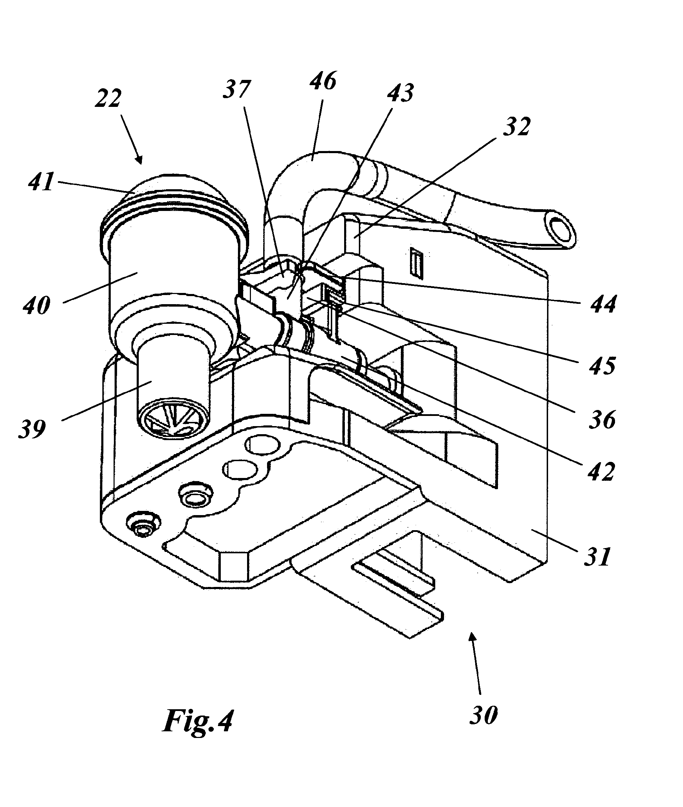

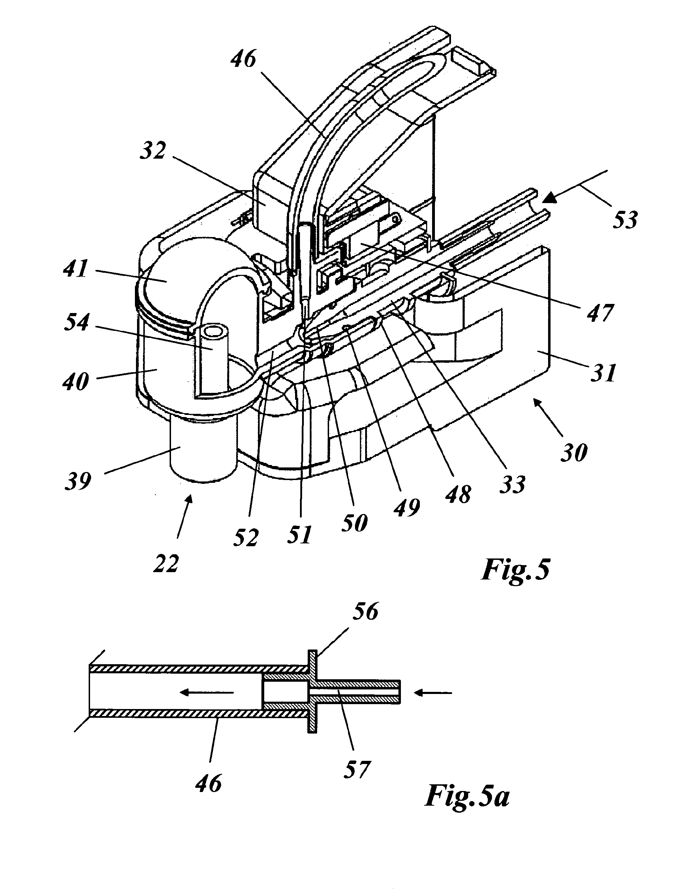

Die Schaumerzeugungseinheit 22 weist eine Mischkammer 40 auf, an die nach unten zu ein Auslass 39 für den erzeugten Milchschaum in Form eines Rohrstutzens anschliesst. Die Mischkammer 40 ist oben durch einen Deckel 41 verschlossen, der die Form einer Kugelkalotte hat und aufgeklebt oder aufgeschweisst ist, aber auch lösbar aufgebracht sein kann. Von der Mischkammer 40 seitlich in tangentialer Richtung abgehend ist ein Einlass 42 in Form eines weiteren Rohrstutzens angeformt, der Teil der hydraulischen Steckverbindung ist. Von diesem Einlass bzw. Rohrstutzen 42 geht radial ein weiterer Einlass 43 ab, der ebenfalls als Rohrstutzen ausgebildet ist und in einen Schlauchansatz 43a übergeht. An diesem Einlass 43 beziehungsweise Schlauchansatz 43a ist gemäss Fig. 4 und 5 ein Milchschlauch 46 angeschlossen, der die Milchleitung 23 bildet und zu dem Milchbehälter 25 führt. Die Schaumerzeugungseinheit 23 und der Milchschlauch 46 bilden eine Einheit, die nach Gebrauch als Ganzes oder auch in Teilen (entweder nur die Schaumerzeugungseinheit oder nur der Milchschlauch) ausgetauscht beziehungsweise weggeworfen oder recycelt wird.

Ebenfalls am Rohrstutzen bzw. Einlass 42 angeformt ist ein radial abstehender Drehriegel 45, der zur Verriegelung hinter ein an der Halterung 30 angebrachtes, abgewinkeltes Halteelement 36 greift (siehe Fig. 4). Der Drehriegel 45 ist auf der Oberseite am vorderen Ende angeschrägt, um den Einlauf hinter dem Halteelement 36 zu erleichtern. Der Rohrstutzen bzw. Einlass 43 ist gleichzeitig ein Teil eines Rastmechanismus, der auch eine an der Halterung 30 angeformte Rastvorrichtung 34 umfasst. Diese Rastvorrichtung 34 hat einen sich tangential zur Steckverbindung erstreckenden Aufnahmeraum 35, der auf einer Seite durch einen elastischen Rastarm 37 und auf der anderen Seite durch das Halteelement 36 begrenzt wird, wobei der Rastarm 37 den Rohrstutzen 43 mit einer nach innen abstehenden Nase einrastend umgreift (siehe Fig. 4), wenn dieser aus der in Fig. 3 dargestellten Ausgangsposition zusammen mit der übrigen Schaumerzeugungseinheit in die Verriegelungsstellung gedreht wird (siehe Drehpfeil Fig. 3).

Die hydraulische Steckverbindung umfasst neben dem Einlass bzw. Rohrstutzen 42 auf der einen Seite eine Dampf-Luft-Düse 33 auf der anderen Seite, die sich von der Halterung 30 in Steckrichtung nach aussen erstreckt. Die Dampf-Luft-Düse 33, die in Fig. 2 und Fig. 5 gut zu erkennen ist, verjüngt sich am vorderen Ende konisch. Dort ist eine zentrale Düsenbohrung 50 vorgesehen, durch die das von hinten zugeführte Dampf-Luft-Gemisch 53 in das Innere des Einlasses 42 eingedüst wird. Der austretende Dampf-Luft-Strahl reisst über die an dieser Stelle in den Innenraum mündende Milchbohrung 51 Milch mit, die über den Milchschlauch 46 nachströmt bzw. angesaugt wird. Der gemeinsame Strom aus Dampf, Luft und Milch tritt dann über den Einspritzkanal 52 (Fig. 5) nahezu tangential in die sich anschliessende Mischkammer 40 ein und führt dort durch Verwirbelung und Vermischung zu einer Bildung von erwärmtem Milchschaum, der über den Auslass 39 nach unten austritt. Über ein von unten durch die Mischkammer 40 geführtes Belüftungsrohr 54 kann Luft nachströmen, so dass der Milchschaum aus der Mischkammer 40 weitgehend abfliessen kann. Um einen definierten und dichten Sitz des Einlasses bzw. Rohrstutzens 42 auf der Dampf-Luft-Düse 33 zu gewährleisten, ist die Düse mit einem umlaufenden Anschlag 48 und einer Dichtung 49, z.B. in Form eines in eine Nut eingelegten O-Rings, versehen.

An dem von der Schaumerzeugungseinheit 22 abgewandten Ende des Milchschlauches 46 kann gemäss Fig. 5a Reduktionsdüse 56 befestigt werden. Die Reduktionsdüse 56 ist ein einstückiges Kunststoffteil, das in den Milchschlauch 46 eingesteckt wird und mit einer Düsenbohrung 57 von vorbestimmtem Innendurchmesser den Milchdurchsatz beim Ansaugen beeinflusst. Vorteil dieser Reduktionsdüse ist, dass durch die Veränderung bzw. Einstellung des Milchdurchsatzes relativ einfach die Temperatur der ausgegebenen Milch beeinflusst werden kann. Es kann so ein Set bestehend aus der Schaumerzeugungseinheit 22, dem Milchschlauch 46 und der Reduktionsdüse 56 gebildet werden, das auf einfache Weise an unterschiedliche Gegebenheiten (gekühlte oder ungekühlte Milch etc.) angepasst werden kann. Insbesondere kann die Reduktionsdüse 56 Teil eines Anschlusssystems sein, dass an den jeweiligen Milchbehälter angepasst ist, der als Tüte oder Karton oder anderweitig ausgebildet sein kann. Es ist aber auch denkbar, dass die Schaumerzeugungseinheit 22 direkt, d.h. ohne separaten Milchschlauch, mit einem Milchbehälter verbindbar ist.

Der sicher einrastend verriegelte und funktionsbereite Sitz der Schaumerzeugungseinheit 22 in der Halterung 30 wird von einem Mikroschalter 47 abgefragt, der mit der Steuerung 55 verbunden ist und in der Halterung 30 hinter dem Halteelement 36 angeordnet ist und über einen Betätigungshebel 38 (Fig. 2) betätigbar ist, der oberhalb des Haltelements 36 schräg vorsteht. An der Schaumerzeugungseinheit 22 ist zur Betätigung des Mikroschalters 47 ein am Einlass 43 angeformtes, tangential zum Einlass 42 orientiertes, plattenförmiges Betätigungselement 44 vorgesehen, das bei der Verriegelungsbewegung gemäss Fig. 3 auf den Betätigungshebel 38 aufläuft und diesen in Richtung Mikroschalter 47 drückt.

Die Schaumerzeugungseinheit 22 und/oder der Milchschlauch 46 können weiterhin mit Codierungsmitteln (Strichcode, RFID o.ä.) ausgestattet sein, die von der Maschine erkannt werden und sicherstellen, dass nur bestimmte Austauschteile eingesetzt werden bzw. bereits benutzte Teile nicht noch einmal verwendet werden.

Besonders vorteilhaft ist der Einsatz der beschriebenen Schaumerzeugungseinheit bzw. einer Kaffeemaschine mit einer solchen Schaumerzeugungseinheit im Zusammenhang mit beispielsweise an öffentlichen Plätzen wie Fussgängerzonen oder dgl. stehenden Getränkeverkaufsautomaten, bei denen die Wartung möglichst einfach und sicher und von nicht besonders geschultem Personal durchführbar sein soll.

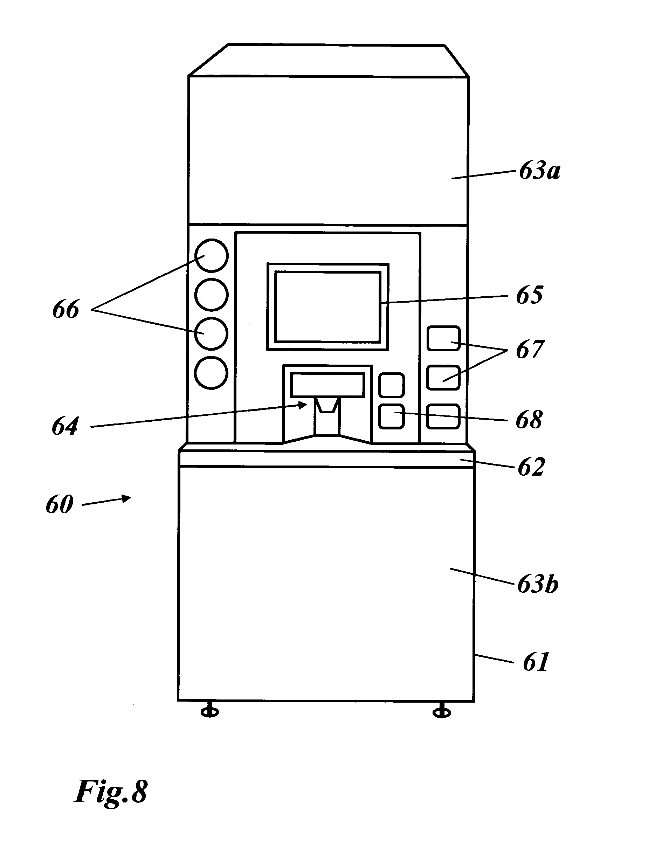

In Fig. 8 ist in einer vereinfachten Darstellung in der Ansicht von vorne ein beispielhafter Getränkeverkaufsautomat 60 wiedergegeben, der nach Art einer Kiosklösung für die Abgabe und Bezahlung von frisch gebrühten Kaffee-basierten Getränken ausgebildet ist.

Der Getränkeverkaufsautomat 60 ist in einem Gehäuse 61 untergebracht, welches einen Oberteil 63a und einen Unterteil 63b aufweist, die durch eine Konsole 62 getrennt sind, welche eine Ebene für die Ausgabe der Getränke gebildet. Die eigentliche Getränkeausgabe 64 ist in einem zurückspringenden Raum oberhalb der Konsole 62 angeordnet. Oberhalb der Getränkeausgabe ist eine Bedien/Anzeigeeinheit 65 angeordnet, die beispielsweise mit einer Touchscreen ausgestattet ist und zur Wahl und Anzeige des zuzubereitenden Getränks dient. Auf der linken Seite sind seitlich Becherschächte 66 angeordnet, aus denen Becher zur Aufnahme des Getränks entnommen werden können. Auf der rechten Seite sind seitlich Fächer 67 angeordnet, in denen Zucker, Löffel oder dergleichen bereitgehalten werden. Des Weiteren ist eine Bezahleinheit 68 vorgesehen, die zur Bezahlung des gewählten Getränks mittels Münzen oder Chipkarte dient. Selbstverständlich können die einzelnen Elemente 64-68 auch anders angeordnet sein, oder andere Elemente zusätzlich oder ersatzweise vorgesehen werden.

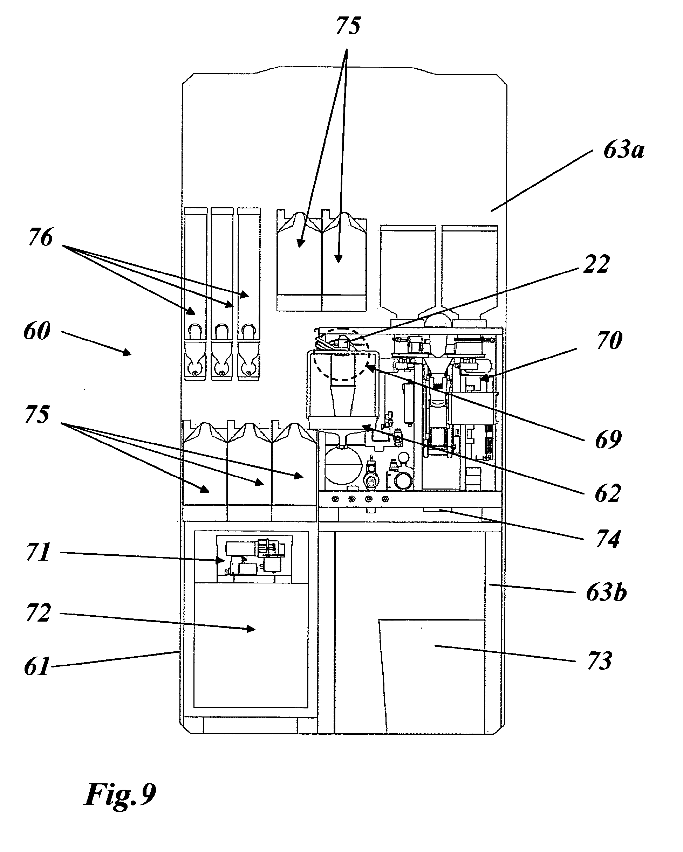

Der Getränkeverkaufsautomat 60 gemäss Fig. 8 ist mit einem vorteilhaften inneren Aufbau versehen, der anhand der Fig. 9 nachfolgend erläutert werden soll.

Zentraler Bestandteil des inneren Aufbaus des Getränkeverkaufsautomaten gemäss Fig. 9 ist ein in sich geschlossenes Basismodul 70 nach Art einer Kaffeemaschine, welches zur Zubereitung eines Kaffeegetränks unter Verwendung von frisch gemahlenem Kaffee ausgebildet ist. Neben dem Basismodul 70 gehört zur Grundausrüstung des Automaten ein Auslaufmodul 69 (in Fig. 9 im gestrichelten Kreis erkennbar), welches fluidisch mit dem Basismodul 20 verbunden ist und für die Ausgabe des Kaffeegetränks in einen darunter stehenden Becher 78 oder dergleichen zuständig ist. Innerhalb des Auslaufmoduls 69 ist die Schaumerzeugungseinheit 22 zu erkennen. Anders als bei herkömmlichen Kaffeemaschinen ist der Auslauf nicht fest in die Maschine (hier: das Basismodul) integriert, sondern separat als Modul ausgebildet und daher eigenständig platzierbar. Auf diese Weise ist es möglich, das Basismodul 70 - wie in Fig. 2 erkennbar - im Getränkeverkaufsautomaten aus der Mitte heraus auf die Seite zu verschieben, wodurch sich eine grössere Flexibilität in der Ausgestaltung des Automaten ergibt.

Im Getränkeverkaufsautomaten gemäss Fig. 9 enthält das Basismodul 20 einen Bedien/Steuerteil zur Steuerung der Getränkezubereitung, Überwachung des Automaten und der vorhandenen Vorräte an Pulver, Sirup, Kaffeebohnen etc.. Der Bedien/Steuerteil kann auch dazu eingesetzt werden, nach einer vorgegebenen Betriebszeit oder am Ende eines Tages den notwendigen Austausch der Schaumerzeugungseinheit 22 anzuzeigen und einen erfolgten Austausch zu bestätigen. Des weiteren enthält das Basismodul 70 eine Brüheinheit, die zum Aufbrühen von Kaffee vorgesehen ist, sowie mit der Brüheinheit zusammen wirkende Kaffeemühlen, mit denen unterschiedliche Kaffeesorten gemahlen und für die Getränkezubereitung bereitgestellt werden können. Unterhalb der Brüheinheit ist eine Fallöffnung 74 platziert, durch die nach Beendigung des Brühvorgangs der verbleibende Kaffeesatz aus dem Basismodul 70 in einen darunter stehenden, grösseren Kaffeesatzbehälter 73 geworfen werden kann. Die Brüheinheit ist vorzugsweise als vollständig aus Kunststoff bestehende Einheit ausgebildet, wie sie beispielsweise in den Druckschriften WO 93/02605 A1 oder WO 2009/027259 A2 oder WO 2009/056426 A1 offenbart ist.

Neben dem Auslaufmodul 69 arbeiten weitere Module mit dem Basismodul 70 zusammen, werden von diesem gesteuert und sind mit diesem oder mit dem Auslaufmodul 69 oder auch untereinander durch entsprechende Fluidschnittstellen fluidisch verbunden. Im Getränkeverkaufsautomaten der Fig. 9 sind als weitere Module fünf Sirupmodule 75, drei Pulvermodule 76 und ein Milchmodul 71 vorgesehen. Die Sirupmodule 75 sind mit dem Auslaufmodul 69 fluidisch verbunden und geben beispielsweise zur Aromatisierung des Kaffeegetränks vorbestimmten Mengen Sirup ab. Die Pulvermodule 76 halten Getränkepulver bereit, die zusammen mit kaltem oder heissem Wasser zur Bereitung anderer Getränke wie Tee oder dergleichen verwendet werden. Das Milchmodul 71 ist unterhalb der Konsole im Unterteil 63b des Getränkeverkaufsautomaten angeordnet und fördert Milch aus einem Milchbehälter, der in einer darunter liegenden Kühleinheit 72 gekühlt gelagert ist.

### Bezugszeichenliste

- 10: Milchschäumvorrichtung
- 11: Dampferzeuger
- 12: Dampfventil
- 13: Dampfleitung
- 14: Spülleitung
- 15,16: T-Stück
- 17: Druckluftleitung
- 18: Luftpumpe
- 19: Antriebsmotor
- 20: Drosselvorrichtung
- 21: Luft
- 22: Schaumerzeugungseinheit
- 23: Milchleitung
- 24: Milchkühler
- 25: Milchbehälter
- 26: Milch
- 27: Tasse bzw. Becher
- 28: Spülmedium
- 29: Wasser (Heisswasser)
- 30: Halterung
- 31: Grundkörper
- 32: Überhang
- 33: Dampf-Luft-Düse
- 34: Rastvorrichtung
- 35: Aufnahmeraum
- 36: Halteelement (winkelförmig)
- 37: Rastarm
- 38: Betätigungshebel (Mikroschalter)
- 39: Auslass
- 40: Mischkammer
- 41: Deckel
- 42,43: Einlass
- 43a: Schlauchansatz
- 44: Betätigungselement
- 45: Drehriegel
- 46: Milchschlauch
- 47: Mikroschalter
- 48: Anschlag
- 49: Dichtung
- 50: Düsenbohrung
- 51: Milchbohrung
- 52: Einspritzkanal
- 53: Dampf-Luft-Gemisch
- 54: Belüftungsrohr
- 55: Steuerung
- 56: Reduktionsdüse
- 57: Düsenbohrung
- 60: Getränkeverkaufsautomat
- 61: Gehäuse
- 62: Konsole
- 63a: Oberteil
- 63b: Unterteil
- 64: Getränkeausgabe
- 65: Bedien/Anzeigeeinheit (z.B. Touchscreen)
- 66: Becherschacht
- 67: Fach
- 68: Bezahleinheit
- 69: Auslaufmodul
- 70: Basismodul
- 71: Michmodul
- 72: Kühleinheit
- 73: Kaffeesatzbehälter
- 74: Fallöffnung
- 75: Sirupmodul
- 76: Pulvermodul

## Patentansprüche

1. Milchschäumvorrichtung (10), insbesondere für eine Kaffee- bzw. Espressomaschine, umfassend eine als leicht austauschbares Wegwerfteil bzw. Recyclingteil ausgebildete Schaumerzeugungseinheit (22) mit einer Mischkammer (40), einem von der Mischkammer (40) nach aussen führenden Auslass (39) für den erzeugten Milchschaum und ersten Mitteln (42), durch welche der Schaumerzeugungseinheit (22) Dampf und Luft (53) zugeführt wird, sowie zweiten Mitteln (43, 43a), durch welche der Schaumerzeugungseinheit (22) Milch zugeführt wird, wobei die Schaumerzeugungseinheit (22) lösbar mit einer Halterung (30) verbunden werden kann, **dadurch gekennzeichnet, dass** die ersten Mittel einen ersten Einlass (42) umfassen, durch welchen Dampf und Luft gemeinsam in die Schaumerzeugungseinheit (22) eintreten, dass an der Halterung (30) eine nach aussen abstehende kombinierte Dampf-Luft-Düse (33) vorgesehen ist, die mit einem Dampferzeuger (11) und einer Luftpumpe (18) in Verbindung steht und durch welche Dampf und Luft gemeinsam herangeführt werden, und dass der erste Einlass (42) und die Dampf-Luft-Düse (33) so ausgebildet und aufeinander abgestimmt sind, dass sie eine lösbare hydraulische Steckverbindung bilden.

2. Milchschäumvorrichtung nach Anspruch 1, **dadurch gekennzeichnet, dass** die aus dem ersten Einlass (42) und der Dampf-Luft-Düse (33) gebildete hydraulische Steckverbindung eine Drehverriegelung (36, 45) aufweist.

3. Milchschäumvorrichtung nach Anspruch 2, **dadurch gekennzeichnet, dass** die aus dem ersten Einlass (42) und der Dampf-Luft-Düse (33) gebildete hydraulische Steckverbindung Rastmittel (34, 37,43) aufweist, mittels derer sie im verriegelten Zustand lösbar einrastet.

4. Milchschäumvorrichtung nach einem der Ansprüche 1-3, **dadurch gekennzeichnet, dass** der erste Einlass (42) als an der Mischkammer (40) angeformter erster Rohrstutzen ausgebildet ist.

5. Milchschäumvorrichtung nach Anspruch 4, **dadurch gekennzeichnet, dass** die zweiten Mittel einen zweiten Einlass (43) umfassen, der als radial vom ersten Rohrstutzen (42) abgehender zweiter Rohrstutzen ausgebildet ist.

6. Milchschäumvorrichtung nach Anspruch 5, **dadurch gekennzeichnet, dass** am zweiten Rohrstutzen (43) ein Schlauchansatz (43a) zum Aufschieben eines Milchschlauches (46) angeformt ist.

7. Milchschäumvorrichtung nach Anspruch 5 oder 6, **dadurch gekennzeichnet, dass** der zweite Rohrstutzen (43) Teil einer lösbaren Rastvorrichtung (34) ist.

8. Milchschäumvorrichtung nach Anspruch 7, **dadurch gekennzeichnet, dass** die Rastvorrichtung (34) einen elastischen Rastarm (37) umfasst, der an der Halterung (30) angebracht ist und mit dem zweiten Rohrstutzen (42) rastend in Eingriff kommt, wenn die aus dem ersten Einlass (42) und der Dampf-Luft-Düse (33) gebildete hydraulische Steckverbindung drehverriegelt wird.

9. Milchschäumvorrichtung nach einem der Ansprüche 1-8, **dadurch gekennzeichnet, dass** die Schaumerzeugungseinheit (22) ein in einem Stück gefertigtes KunststoffSpritzgussteil mit oben offener Mischkammer (40) umfasst, die durch einen aufgesetzten Deckel (41) verschlossen wird.

10. Milchschäumvorrichtung nach Anspruch 3, **dadurch gekennzeichnet, dass** an der Halterung (30) elektrische Schaltmittel (47) angeordnet sind, welche betätigt werden, wenn die aus dem ersten Einlass (42) und der Dampf-Luft-Düse (33) gebildete hydraulische Steckverbindung im verriegelten Zustand lösbar einrastet.

11. Milchschäumvorrichtung nach Anspruch 10, **dadurch gekennzeichnet, dass** an der Schaumerzeugungseinheit (22) ein Betätigungselement (44) zur Betätigung der elektrischen Schaltmittel (47) angeordnet ist.

12. Milchschäumvorrichtung nach Anspruch 10 oder 11, **dadurch gekennzeichnet, dass** die elektrischen Schaltmittel einen Mikroschalter (47) umfassen.

13. Milchschäumvorrichtung nach Anspruch 2, **dadurch gekennzeichnet, dass** die Drehverriegelung (36, 45) ein an der Halterung (30) angebrachtes Halteelement (36) umfasst, hinter welches die Schaumerzeugungseinheit (22) mit einem angeformten Drehriegel (45) greift.

14. Milchschäumvorrichtung nach einem der Ansprüche 1-13, **dadurch gekennzeichnet, dass** Mittel (14, 15, 28) zum Spülen der Schaumerzeugungseinheit (22) vorgesehen sind.

15. Milchschäumvorrichtung nach Anspruch 14, **dadurch gekennzeichnet, dass** die Mittel zum Spülen der Schaumerzeugungseinheit (22) eine Spülleitung (14) zur Zuführung eines Spülmediums (28) umfassen, welche mit der Dampf-Luft-Düse (33) in Verbindung steht.

16. Milchschäumvorrichtung nach einem der Ansprüche 1-15, **dadurch gekennzeichnet, dass** für die Zuführung der Milch zur Schaumerzeugungseinheit (22) ein Milchschlauch (46) vorgesehen ist, und dass der Durchsatz der Milch durch den Milchschlauch durch eine Reduktionsdüse (56) einstellbar ist, welche in das eine Ende des Milchschlauches (46) einsteckbar ist.

17. Kaffee- bzw. Espressomaschine mit einer Milchschäumvorrichtung (10) nach einem der Ansprüche 1-16.

18. Getränkeverkaufsautomat (60) mit einer Milchschäumvorrichtung (10) nach einem der Ansprüche 1-16.

19. Getränkeverkaufsautomat nach Anspruch 18, **dadurch gekennzeichnet, dass** die Milchschäumvorrichtung (10) in ein Auslaufmodul (69) des Getränkeverkaufsautomaten (60) integriert ist.

## Claims

1. A milk-frothing apparatus (10), in particular for a coffee or espresso machine, comprising a froth-generating unit (22) which is in the form of a disposable part or recyclable part, which is easy to replace, and has a mixing chamber (40), an outlet (39), which leads to the outside from the mixing chamber (40), for the generated milk froth, and first means (42) through which the froth-generating unit (22) is supplied with steam and air (53), and also second means (43, 43a) through which the froth-generating unit (22) is supplied with milk, wherein the froth-generating unit (22) can be connected to a holding means (30) in a releasable manner, **characterized in that** the first means comprise a first inlet (42) through which steam and air enter the froth-generating unit (22) together, **in that** a combined steam/air nozzle (33), which projects outward and is connected to a steam generator (11) and an air pump (18) and through which steam and air are routed together, is provided on the holding means (30), and **in that** the first inlet (42) and the steam/air nozzle (33) are designed and matched to one another such that they form a releasable hydraulic plug connection.

2. The milk-frothing apparatus as claimed in claim 1, **characterized in that** the hydraulic plug connection, which is formed from the first inlet (42) and the steam/air nozzle (33), has a rotary locking means (36, 45).

3. The milk-frothing apparatus as claimed in claim 2, **characterized in that** the hydraulic plug connection, which is formed from the first inlet (42) and the steam/air nozzle (33), has latching means (34, 37, 43) by means of which it can be releasably latched in the locked state.

4. The milk-frothing apparatus as claimed in one of claims 1-3, **characterized in that** the first inlet (42) is in the form of a first pipe connection piece which is integrally formed on the mixing chamber (40).

5. The milk-frothing apparatus as claimed in claim 4, **characterized in that** the second means comprise a second inlet (43) which is in the form of a second pipe connection piece which projects radially from the first pipe connection piece (42).

6. The milk-frothing apparatus as claimed in claim 5, **characterized in that** a hose attachment (43a) onto which a milk hose (46) is to be pushed is integrally formed on the second pipe connection piece (43).

7. The milk-frothing apparatus as claimed in claim 5 or 6, **characterized in that** the second pipe connection piece (43) is part of a releasable latching apparatus (34).

8. The milk-frothing apparatus as claimed in claim 7, **characterized in that** the latching apparatus (34) comprises an elastic latching arm (37) which is attached to the holding means (30) and can engage in a latching manner with the second pipe connection piece (42) when the hydraulic plug connection, which is formed from the first inlet (42) and the steam/air nozzle (33), is locked in a rotary manner.

9. The milk-frothing apparatus as claimed in one of claims 1-8, **characterized in that** the froth-generating unit (22) comprises a plastic injection-molded part which is produced in one piece and has a mixing chamber (40) which is open at the top and is closed by a fitted cover (41).

10. The milk-frothing apparatus as claimed in claim 3, **characterized in that** electrical switching means (47) are arranged on the holding means (30), said electrical switching means being operated when the hydraulic plug connection, which is formed from the first inlet (42) and the steam/air nozzle (33), is releasably latched in the locked state.

11. The milk-frothing apparatus as claimed in claim 10, **characterized in that** an operating element (44) for operating the electrical switching means (47) is arranged on the froth-generating unit (22).

12. The milk-frothing apparatus as claimed in claim 10 or 11, **characterized in that** the electrical switching means comprise a microswitch (47).

13. The milk-frothing apparatus as claimed in claim 2, **characterized in that** the rotary locking means (36, 45) comprises a holding element (36) which is attached to the holding means (30) and behind which the froth-generating unit (22) engages by way of an integrally formed rotary bolt (45).

14. The milk-frothing apparatus as claimed in one of claims 1-13, **characterized in that** means (14, 15, 28) for rinsing the froth-generating unit (22) are provided.

15. The milk-frothing apparatus as claimed in claim 14, **characterized in that** the means for rinsing the froth-generating unit (22) comprise a rinse line (14) for supplying a rinsing medium (28), said rinse line being connected to the steam/air nozzle (33).

16. The milk-frothing apparatus as claimed in one of claims 1-15, **characterized in that** a milk hose (46) is provided for supplying the milk to the froth-generating unit (22), and **in that** the milk throughflow rate through the milk hose can be adjusted by a reduction nozzle (56) which can be inserted into one end of the milk hose (46).

17. A coffee or espresso machine having a milk-frothing apparatus (10) as claimed in one of claims 1-16.

18. An automatic beverage vending machine (60) having a milk-frothing apparatus (10) as claimed in one of claims 1-16.

19. The automatic beverage vending machine as claimed in claim 18, **characterized in that** the milk-frothing apparatus (10) is integrated into an outlet module (69) of the automatic beverage vending machine (60).

## Revendications

1. Mousseur à lait (10), notamment pour une machine à café ou à expresso, comprenant une unité de moussage (22) conçue en une pièce jetable ou une pièce recyclable facilement interchangeable, avec un compartiment de mélange (40), une sortie (39) menant vers l'extérieur à partir du compartiment de mélange (40) pour la mousse de lait créée et des premiers moyens (42) par lesquels de la vapeur et de l'air (53) sont amenés vers l'unité de moussage (22), ainsi que des deuxièmes moyens (43, 43a) par lesquels du lait est amené vers l'unité de moussage (22), l'unité de moussage (22) pouvant être reliée de manière amovible avec une fixation (30), **caractérisé en ce que** les premiers moyens comprennent une première entrée (42), à travers laquelle de la vapeur et de l'air pénètrent en commun dans l'unité de moussage (22), **en ce que** sur la fixation (30) est prévue une buse mixte air/vapeur (33), débordant vers l'extérieur qui est en liaison avec un générateur de vapeur (11) et une pompe à air (18) et à travers laquelle de la vapeur et de l'air sont amenés en commun et **en ce que** la première entrée (42) et la buse air/vapeur (33) sont conçues et mutuellement adaptées de sorte à former un connecteur hydraulique amovible.

2. Mousseur à lait selon la revendication 1, **caractérisé en ce que** le connecteur hydraulique formé par la première entrée (42) et la buse air/vapeur (33) comporte un verrouillage rotatif (36, 45).

3. Mousseur à lait selon la revendication 2, **caractérisé en ce que** le connecteur hydraulique formé par la première entrée (42) et la buse air/vapeur (33) comporte des moyens d'enclenchement (34, 37, 43) au moyen desquels il s'enclenche de manière amovible dans la position verrouillée.

4. Mousseur à lait selon l'une quelconque des revendications 1 à 3, **caractérisé en ce que** la première entrée (42) est constitué comme une tubulure rapportée sur le compartiment de mélange (40).

5. Mousseur à lait selon la revendication 4, **caractérisé en ce que** les deuxièmes moyens comprennent une deuxième entrée (43) qui est conçue en tant que deuxième tubulure partant en direction radiale à partir de la première tubulure (42).

6. Mousseur à lait selon la revendication 5, **caractérisé en ce que** sur la deuxième tubulure (43) est rapporté un embout (43a) pourflexible destiné à emboîter un flexible à lait (46).

7. Mousseur à lait selon la revendication 5 ou la revendication 6, **caractérisé en ce que** la deuxième tubulure (43) est un élément d'un dispositif d'enclenchement (34) amovible.

8. Mousseur à lait selon la revendication 7, **caractérisé en ce que** le dispositif d'enclenchement (34) comprend un bras d'enclenchement (37) élastique qui est monté sur la fixation (30) et qui s'engage par enclenchement avec la deuxième tubulure (42), lorsqu'on verrouille par rotation le connecteur hydraulique formé par la première entrée (42) et la buse air/vapeur (33).

9. Mousseur à lait selon l'une quelconque des revendications 1 à 8, **caractérisé en ce que** l'unité de moussage (22) comprend une pièce en matière plastique moulée par injection fabriquée en monobloc, avec un compartiment de mélange (40) ouvert sur le haut, que l'on referme en posant un couvercle (41).

10. Mousseur à lait selon la revendication 3, **caractérisé en ce que** sur la fixation (30) sont placés des moyens de commutation (47) électrique, qui sont manoeuvrés lorsque le connecteur formé par la première entrée (42) et la buse air/vapeur (33) s'enclenche de manière amovible en position verrouillée.

11. Mousseur à lait selon la revendication 10, **caractérisé en ce que** sur l'unité de moussage (22) est placé un élément de manoeuvre (44), destiné à manoeuvrer les moyens de commutation (47) électrique.

12. Mousseur à lait selon la revendication 10 ou la revendication 11, **caractérisé en ce que** les moyens de commutation électrique comprennent un microrupteur (47).

13. Mousseur à lait selon la revendication 2, **caractérisé en ce que** le verrouillage rotatif (36, 45) comprend un élément de retenue (36) monté sur la fixation (30), derrière lequel l'unité de moussage (22) s'engage par un verrou rotatif (45) rapporté.

14. Mousseur à lait selon l'une quelconque des revendications 1 à 13, **caractérisé en ce que** des moyens (14, 15, 28) pour rincer l'unité de moussage (22) sont prévus.

15. Mousseur à lait selon la revendication 14, **caractérisé en ce que** les moyens pour rincer l'unité de moussage (22) comprennent un conduit de rinçage (14) pour amener un agent de rinçage (28), lequel est en liaison avec la buse air/vapeur (33).

16. Mousseur à lait selon l'une quelconque des revendications 1 à 15, **caractérisé en ce qu'**un flexible à lait (46) est prévu pour amener le lait vers l'unité de moussage (22) et **en ce que** le débit du lait à travers le flexible à lait est réglable via une buse réductrice (56), laquelle peut s'enficher dans l'une des extrémités du flexible à lait (46).

17. Machine à café ou à expresso avec un mousseur à lait (10) selon l'une quelconque des revendications 1 à 16.

18. Distributeur de boissons (60) avec un mousseur à lait (10) selon l'une quelconque des revendications 1 à 16.

19. Distributeur de boissons selon la revendication 18, **caractérisé en ce que** le mousseur à lait (10) est intégré dans un module d'écoulement (69) du distributeur de boissons (60).
